# EUROPÄISCHE PATENTSCHRIFT

(11) **EP 3 084 329 B1**
(45) Veröffentlichungstag und Bekanntmachung des Hinweises auf die Patenterteilung: **11.12.2019**
(21) Anmeldenummer: 14752565.3
(22) Anmeldetag: 16.08.2014
(51) Int. Cl.: B29K 105/06, B32B 38/10, B32B 43/00, D04H 3/11, D04H 3/16, D06C 7/00, D06C 7/02, D06C 29/00, F26B 13/00, F26B 21/00, F26B 23/00, D04H 1/54, F26B 13/16, D06B 5/08

(54) **VORRICHTUNG UND VERFAHREN ZUM THERMISCHEN VERFESTIGEN EINER TEXTILEN WARENBAHN**
DEVICE AND METHOD FOR THERMAL CONSOLIDATION OF A TEXTILE PRODUCT WEB
DISPOSITIF ET PROCÉDÉ DE CONSOLIDATION THERMIQUE D'UNE BANDE CONTINUE DE TEXTILE

(30) Priorität: 16.12.2013 DE 102013114075
(43) Veröffentlichungstag der Anmeldung: 26.10.2016
(73) Patentinhaber: Trützschler GmbH & Co. KG, 41199 Mönchengladbach (DE)
(72) Erfinder: WEIGERT, Thomas, 65843 Sulzbach (DE); LIEBSCHER, Willi, 63486 Bruchköbel (DE); HAJDU, Stephan, 63322 Rödermark (DE)
(86) Internationale Anmeldenummer: PCT/EP2014/002254
(87) Internationale Veröffentlichungsnummer: WO 2015/090482

(56) Entgegenhaltungen:
- EP-A2- 0 105 730
- WO-A1-2011/127885
- WO-A1-2012/055732
- WO-A1-2012/127013
- DE-A1- 1 604 872
- DE-A1-102007 053 030
- DE-A1-102009 016 019
- US-A- 3 442 740

## Beschreibung

Die Erfindung betrifft eine Vorrichtung und ein Verfahren zum thermischen Verfestigen einer textilen Warenbahn, wobei die textile Warenbahn über eine Umlenktrommel in eine Verfestigungsanlage geführt wird, um eine Durchströmtrommel herum und über eine Kühltrommel wieder heraus geführt wird.

Bei diesen thermischen Verfestigungsanlagen werden Vliesstoffe aus oder mit thermoplastischen Fasern mittels Heißluft, Sattdampf oder Heißwasser fixiert oder verfestigt, um Spannungen im Vlies abzubauen und die Fasern zu fixieren. Dabei wird erwärmte Frischluft einem Behandlungsraum zugeführt, wobei die Frischluft durch die Warenbahn in eine Durchströmtrommel geleitet wird und dann über einen Ventilator abgesaugt wird. Die Frischluft nimmt die Feuchtigkeit aus der Warenbahn auf und erhitzt diese. Innerhalb der Verfestigungsanlage wird ein Unterdruck angelegt, wodurch sich in Verbindung mit den Luftströmungen unterschiedliche Druck- und Strömungsverhältnisse bilden. Durch den Unterdruck, die hohe Temperatur und den Feuchtigkeitsverlust kann die Warenbahn auf der Trommel zum Kleben neigen, wodurch in Folge die Betriebsgeschwindigkeit reduziert werden muss und die Warenbahn beschädigt werden kann. Das Ankleben auf der Trommel kann bei bestimmten Produkten, die beispielsweise thermoplastische Bikomponentenfasern enthalten, besonders stark ausgeprägt sein.

In der WO2012/055732A1 wird ein Umlufttrockner beschrieben, bei dem die Luftdurchlässigkeit der im Gehäuse angeordneten Siebdecke einstellbar ist.

Der Umlufttrockner der WO2012/127013 offenbart eine in der Trommel angeordnete Absaugeinrichtung, mit der die Heißluft aus dem Behandlungsraum mit einem stärkeren Unterdruck durch die Materialbahn saugt.

In der DE 102009016019 A1 wird ein Umlufttrockner mit einem Wärmetauscher gekoppelt, wobei der Wärmetauscher kalte Frischluft erwärmt und diese angewärmte Frischluft in den Behandlungsraum des Trockners geführt wird.

Die DE 102007053030 A1 beschreibt einen Umlufttrockner, bei dem die zu trocknende Warenbahn in einem Gehäuse um eine luftdurchlässige Trommel geführt und mittels einer Kühltrommel umgelenkt und abgezogen wird. Die Luft von der Kühltrommel kann dabei in die Trommel gelangen und sich dabei mit der Warmluft vermischen, was nicht effizient ist.

Aufgabe der vorliegenden Erfindung ist es, eine Vorrichtung und ein Verfahren zum thermischen Verfestigen einer textilen Warenbahn zu schaffen, mit der die textile Warenbahn im Auslaufbereich der Verfestigungsanlage von der Durchströmtrommel abgelöst wird.

Die Aufgabe wird nach Anspruch 1 und Anspruch 9 dadurch gelöst, dass die textile Warenbahn über eine Umlenktrommel in die Verfestigungsanlage geführt wird, um eine Durchströmtrommel herum und über eine Kühltrommel wieder heraus geführt wird, wobei erhitzte Frischluft die Warenbahn und die Durchströmtrommel durchströmt und die Abluft aus der Verfestigungsanlage abgezogen wird.

Erfindungsgemäß ist vorgesehen, dass Kühlluft kurz vor dem Ablösepunkt der Warenbahn von der Durchströmtrommel auf die Warenbahn gerichtet wird.

Die Erfindung geht von der Erkenntnis aus, dass mit einer Abkühlung der Warenbahn kurz vor dem Ablösepunkt eine Verfestigung und leichte Schrumpfung der Warenbahn erfolgt, wodurch sich die Warenbahn leicht von der Durchströmtrommel löst.

Dabei wird die Kühlluft mittels eines Kanals und/oder einer Düse auf die Warenbahn gerichtet. Damit kann der Bereich der Abkühlung der Warenbahn örtlich begrenzt werden, wodurch die Effektivität der Verfestigungsanlage nicht beeinträchtigt wird, da ein möglichst großer Umfangsbereich der Durchströmtrommel zur Verfestigung genutzt wird. Durch den Kanal oder die Düse wird über die gesamte Arbeitsbreite die Warenbahn gekühlt.

In bevorzugter Ausführungsform durchströmt die Kühlluft die Warenbahn und die Durchströmtrommel. Dadurch wird das Temperaturprofil der Warenbahn auf beiden Seiten gesenkt und nicht mehr durch die Durchströmtrommel erwärmt. Die Warenbahn wird damit über den gesamten Querschnitt über die Arbeitsbreite abgekühlt, wodurch sich die Fasern oder Filamente verfestigen und leicht schrumpfen.

Zu einer weiteren Verbesserung trägt bei, dass mittels eines Luftsystems die Kühlluft von der Frisch- und Heißluft innerhalb der Durchströmtrommel getrennt wird. Die örtlich auf einen Umfangsbereich über die Arbeitsbreite erzielte Kühlwirkung hat damit keinen wesentlichen Einfluss auf die Energiebilanz der Verfestigungsanlage, da die Kühlluft sich nicht mit der erwärmten Frisch- und der mit Feuchtigkeit gesättigten Heiß- bzw. Abluft vermischt.

Von Vorteil ist, dass das Luftsystem als eine innerhalb der Durchströmtrommel angeordnete und mindestens zum Teil geschlossene Umlenkung ausgebildet ist, mit der die Kühlluft aus der Verfestigungsanlage wieder abgeleitet wird. Das Luftsystem begrenzt damit die Kühlwirkung auf einen kleinen Bereich der Durchströmtrommel, so dass diese sich nur örtlich abkühlt.

Die Ausbildung des Luftsystems als geschlossener Kanal hat den Vorteil, dass die Kühlluft nur an zwei begrenzten Bereichen die Durchströmtrommel passiert, was für das Temperaturniveau der Durchströmtrommel vorteilhaft ist und die Energiebilanz der Verfestigungsanlage nicht wesentlich beeinflusst.

Die Verwendung des Abschirmbleches zur Umlenkung der Kühlluft hat den Vorteil der Nachrüstbarkeit der Verfestigungsanlage, da alle notwendigen Anbauten und Ergänzungen außerhalb der Verfestigungsanlage erfolgen können. Soll das Abschirmblech eine schalenförmige konvexe oder konkave Form erhalten, kann es mit geringem Aufwand gegen das vorhandene Abschirmblech ausgetauscht werden, ohne die Verfestigungsanlage umzubauen.

Weitere vorteilhafte Ausführungsformen werden über die Unteransprüche geschützt.

Die Erfindung wird anhand der beiliegenden Zeichnungen näher erläutert; in diesen zeigt
Fig 1 eineschematische Darstellung einer ersten Ausführungsform einer erfindungsgemäßen Verfestigungsanlage;
Fig. 2 eine schematische Darstellung einer zweiten Ausführungsform einer erfindungsgemäßen Verfestigungsanlage.

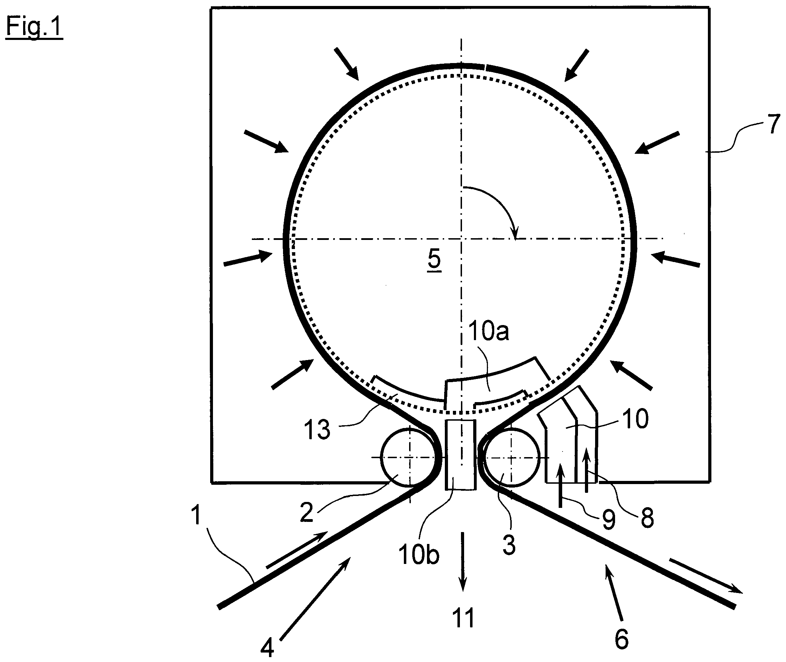

Fig. 1 zeigt eine mit Heißluft betriebene Verfestigungsanlage in OmegaBauweise. Die zu verfestigende Warenbahn 1 läuft im Einlaufbereich 4 über eine Umlenktrommel 2, die als Saugtrommel ausgebildet sein kann, in die Verfestigungsanlage ein, umschlingt die lu
ftdurchlässig gestaltete Durchströmtr
ommel 5 im Uhrzeigersinn und läuft über eine Kühltrommel 3 im Auslaufbereich 6 aus der Verfestigungsanlage wieder aus. Die Durchströmtrommel 5, die Umlenktrommel 2 und die Kühltrommel 3 können in einem gemeinsamen Gehäuse 7 angeordnet sein, in welches über eine oder mehrere Zuströmöffnungen heiße Frischluft 8 eingeleitet

wird. Die heiße Frischluft 8 durchströmt die Warenbahn 1 , erhitzt diese dabei und wird durch einen in der Durchströmtrommel 5 stirnseitig angeordneten, nicht dargestellten Ventilator abgesaugt. Dabei wird die Durchströmtrommel 5 unter Unterdruck gesetzt, so dass in der Verfestigungsanlage unterschiedliche Strömungsverhältnisse auftreten.

Um ein Ankleben der Warenbahn 1 auf der Durchströmtrommel 5 zu verhindern, sieht die Erfindung vor, die Warenbahn 1 kurz vor dem Ablösen von der Durchströmtrommel 5 zu kühlen. Hierzu ist ein Kanal 10 am Auslaufbereich 6 angeordnet, über den Kühlluft 9 mittels nicht dargestellter Ventilatoren auf die Warenbahn 1 geleitet wird. Die Kühlluft 9 durchströmt die Warenbahn 1 über die Arbeitsbreite entlang der Längsachse der Durchströmtrommel und kühlt diese. Dabei durchströmt die Kühlluft auch die Durchströmtrommel 5 in einem örtlich begrenzten Bereich und wird über einen weiteren Kanal 10a, der innerhalb der Durchströmtrommel 5 angeordnet ist, umgelenkt. Die Kühlluft 9 durchströmt dann ein zweites Mal die Durchströmtrommel 5 und wird über den Kanal 10b, der zwischen der Umlenktrommel 2 und der Kühltrommel 3 angeordnet ist, wieder abgeführt. Im Bereich der Kühltrommel 3 ist unter anderem eine Zufuhr für die Frischluft 8 angeordnet. Dadurch, dass zur Warenkühlung ein separates Luftsystem verwendet wird, das von der Frischluft und der Heißluft der Verfestigungsanlage vollständig getrennt ist, wird der Lufthaushalt der Verfestigungsanlage nicht beeinflusst. Das Luftsystem umfasst in diesem Ausführungsbeispiel mindestens den Kanal 10a, der die verschiedenen Luftströmungen innerhalb der Durchströmtrommel 5 voneinander trennt und vom Auslaufbereich 6 bis in den Bereich zwischen die Umlenktrommel 2 und die Kühltrommel 3 reicht. Der Kanal 10a ist als ein auf dem Umfang geschlossener Kanal ausgebildet, der sich ebenfalls über die Arbeitsbreite der Verfestigungsanlage parallel zur Längsachse der Durchströmtrommel erstreckt und zwei Öffnungen aufweist, wobei eine Öffnung mit dem Kanal 10 und die andere Öffnung mit dem Kanal 10b zusammenwirkt. Ein Abschirmblech 13 schließt bündig an den Kanal 10a an und reicht bis in den Einlaufbereich 4 in den Bereich oberhalb der Umlenktrommel 2. Das Abschirmblech 13 ist parallel zur Innenseite der Durchströmtrommel gestaltet und angeordnet und trennt die Heiß- und Frischluft innerhalb der Verfestigungsanlage von der Umgebungsluft.

Eine Absaugung 11 mit einem nicht dargestellter Ventilator, die unterhalb der Verfestigungsanlage im Bereich der Umlenktrommel 2 und der Kühltrommel 3 angeordnet sein kann, zieht die Kühlluft 9 aus dem Kanal 10b ab. Der zwischen der Umlenktrommel 2 und der Kühltrommel 3 angeordnete Kanal 10b kann verschwenkbar gestaltet sein, womit die Einführung einer Warenbahn 1 beim Anfahren der Anlage erleichtert wird. Außerdem ist die Verfestigungsanlage sehr schnell auf Warenbahnen mit normalen Fasern umrüstbar, die keine oder eine geringe Klebeneigung aufweisen. Eine Anpassung der Kühlleistung an die zu verarbeitende Warenbahn 1 kann mittels einer Vorrichtung erfolgen, in dem der Querschnitt des Kanals 10 verändert wird und/oder die Ventilatoren, die die Kühlluft 9 fördern, eine variable Leistung aufweisen, die beispielsweise über Frequenzumrichter zu steuern ist. Alternativ kann bei dieser Ausführungsform die Kühlluft 9 auch über den Kanal 10b zugeführt werden, im Kanal 10a innerhalb der Durchströmtrommel 5 umgelenkt werden und durch den Kanal 10 abgezogen werden. Diese Strömungsrichtung unterstützt das Ablösen der Warenbahn 1 von der Durchströmtrommel.

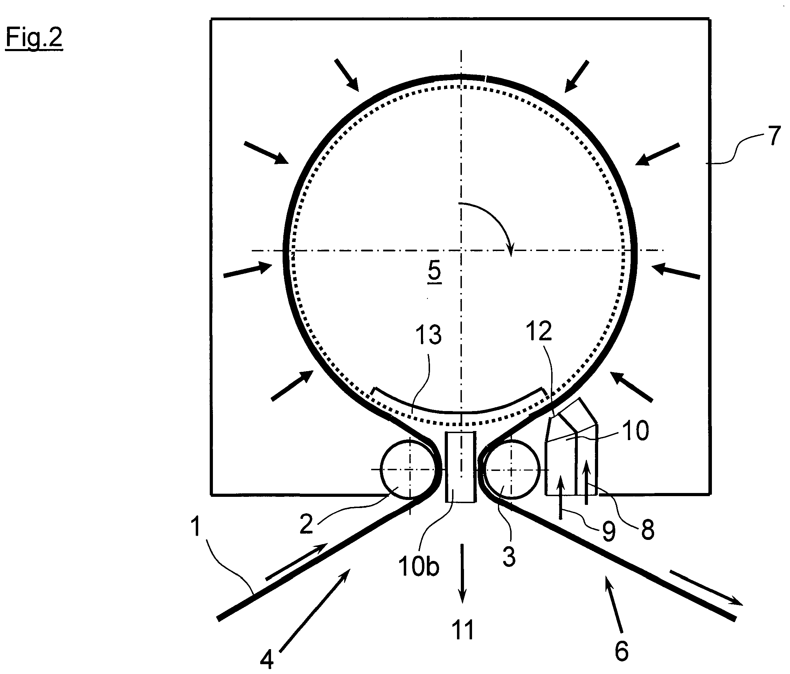

In dem zweiten Ausführungsbeispiel nach Figur 2, bei dem die Verfestigungsanlage im Wesentlichen den gleichen Aufbau und die gleiche Funktion hat, wird ein an sich schon bekanntes Abschirmblech 13 verwendet, um die Kühlluft 9 aus der Verfestigungsanlage abzuführen. Das Luftsystem umfasst in diesem Ausführungsbeispiel mindestens das Abschirmblech 13, das die verschiedenen Luftströmungen innerhalb der Durchströmtrommel voneinander trennt und vom Auslaufbereich 6 bis in den Bereich zwischen die Umlenktrommel 2 und die Kühltrommel 3 reicht. Das Abschirmblech 13 hat die Aufgabe, die Umgebung außerhalb der Verfestigungsanlage im Einlauf- und Auslaufbereich 4, 6 strömungstechnisch von der Durchströmtrommel 5 zu trennen, da diese unter Unterdruck steht und die in diesem Bereich zwischen der Umlenktrommel 2 und der Kühltrommel 3 einströmende Luft die Warenbahn 1 nicht erhitzt. Das Abschirmblech 13 kann als konvex oder konkav geformte Schale gestaltet sein, das parallel zum Innendurchmesser der Durchströmtrommel angeordnet ist. Es hat die Aufgabe, einerseits die Kühlluft 9 von der Luftströmung in der Durchströmtrommel 5 abzuschirmen, andererseits aber auch eine Umlenkung der Kühlluft 9 zu bewirken. Dabei strömt die Kühlluft 9 durch eine Düse 12 auf und durch die Warenbahn 1 in einen Randbereich der Durchströmtrommel 5 und kühlt die Warenbahn 1 ab. Mittels der Düse 12 kann ein sehr schmaler Streifen oder Bereich abgekühlt werden, wobei die Kühlluft genau auf den Randbereich des Abschirmbleches 13 geleitet wird. Durch das Abschirmblech 13, das als konvexe oder konkave Schale geformt sein kann, erfolgt eine Umlenkung der Kühlluft 9 aus der Verfestigungsanlage heraus, in dem diese zwischen der Umlenktrommel 2 und der Kühltrommel 3 über eine Absaugung 11 abgezogen wird. In bevorzugter Ausführungsform kann zwischen der Umlenktrommel 2 und der Kühltrommel 3 ein Kanal 10b angeordnet sein, der verschwenkbar gestaltet ist. Die Verfestigungsanlage ist damit sehr schnell auf Warenbahnen mit normalen Fasern umrüstbar, die keine oder eine geringe Klebeneigung aufweisen. Weiterhin erleichtert der verschwenkbare Kanal 10b das Einführen einer Warenbahn 1 beim Anfahren der Anlage.

In beiden Ausführungsbeispielen wird der Kanal 10 bzw. die Düse 12 örtlich begrenzt auf einen kleinen Umfangsbereich, aber parallel zur Längsachse der Durchströmtrommel 5 über die gesamte Arbeitsbreite auf die Warenbahn 1 gerichtet, kurz bevor die Warenbahn 1 tangential auf die Kühltrommel 3 geleitet wird. Der Ablösepunkt der Warenbahn 1 von der Durchströmtrommel 5 wird durch den Schnittpunkt der Senkrechten durch den Mittelpunkt der Durchströmtrommel 5 mit der Tangente zwischen Durchströmtrommel 5 und Kühltrommel 3 gebildet. Da der Ablösepunkt der Warenbahn 1 von der Durchströmtrommel unter anderem von den Durchmessern und der Anordnung der Durchströmtrommel 5 und der Umlenk- bzw. Kühltrommel 2, 3 abhängt, kann die Anordnung des Kanals 10 bzw. der Düse 12 variieren. Bei einem Durchmesser der Durchströmtrommel von beispielsweise 2650 mm kann die Kühlluft 9 auf einen Bereich des Umfanges der Durchströmtrommel zwischen 50 mm und 1200 mm vor den Ablösepunkt auf die Warenbahn 1 gerichtet werden. Bei hoher Geschwindigkeit der Durchströmtrommel 5 muss die Kühlluft 9 in einem größeren Abstand vom Ablösepunkt auf die Warenbahn 1 gerichtet werden, als bei einer geringen Geschwindigkeit. Natürlich ist auch die Klebeneigung der Warenbahn 1 dabei zu berücksichtigen.

### Bezugszeichen

- 1: Warenbahn
- 2: Umlenktrommel
- 3: Kühltrommel
- 4: Einlaufbereich
- 5: Durchströmtrommel
- 6: Auslaufbereich
- 7: Gehäuse
- 8: Frischluft
- 9: Kühlluft
- 10: Kanal
- 10a: Kanal
- 10b: Kanal
- 11: Absaugung
- 12: Düse
- 13: Abschirmblech

## Patentansprüche

1. Vorrichtung zum thermischen Verfestigen einer textilen Warenbahn, wobei die textile Warenbahn (1) über eine Umlenktrommel (2) in eine Verfestigungsanlage geführt wird, um eine Durchströmtrommel (5) herum geführt und über eine Kühltrommel (3) wieder heraus geführt wird, wobei erhitzte Frischluft die Warenbahn (1) und die Durchströmtrommel (5) durchströmt und die Abluft aus der Verfestigungsanlage abgezogen wird, **dadurch gekennzeichnet, dass** Kühlluft (9) vor dem Ablösepunkt der Warenbahn (1) von der Durchströmtrommel (5) auf die Warenbahn (1) gerichtet wird, wobei die Kühlluft (9) mittels eines Kanals (10) und/oder einer Düse (12) auf die Warenbahn (1) gerichtet wird.

2. Vorrichtung nach Anspruch 1, **dadurch gekennzeichnet, dass** die Kühlluft (9) die Warenbahn (1) und die Durchströmtrommel (5) durchströmt.

3. Vorrichtung nach Anspruch 2, **dadurch gekennzeichnet, dass** mittels eines Luftsystems die Kühlluft (9) von der Frisch- und Heißluft innerhalb der Durchströmtrommel (5) getrennt wird.

4. Vorrichtung nach Anspruch 3, **dadurch gekennzeichnet, dass** das Luftsystem als eine innerhalb der Durchströmtrommel (5) angeordnete und mindestens zum Teil geschlossene Umlenkung ausgebildet ist, mit der die Kühlluft (9) aus der Verfestigungsanlage wieder abgeleitet wird.

5. Vorrichtung nach einem der vorhergehenden Ansprüche, **dadurch gekennzeichnet, dass** das Luftsystem mindestens einen Kanal (10a) oder ein Abschirmblech (13) umfasst.

6. Vorrichtung nach Anspruch 5, dass die Kühlluft (9) durch einen Kanal (10b) aus der Verfestigungsanlage abgeführt wird, der im Bereich zwischen der Umlenktrommel (2) und der Kühltrommel (3) angeordnet ist.

7. Vorrichtung nach Anspruch 6, **dadurch gekennzeichnet, dass** der Kanal (10b) verschwenkbar angeordnet ist.

8. Vorrichtung nach Anspruch 5, **dadurch gekennzeichnet, dass** das Abschirmblech (13) als konkav oder konvex geformte Schale ausgebildet ist.

9. Verfahren zum Verfestigen einer textilen Warenbahn, wobei die textile Warenbahn (1) über eine Umlenktrommel (2) in eine Verfestigungsanlage geführt wird, um eine Durchströmtrommel (5) herum geführt und über eine Kühltrommel (3) wieder heraus geführt wird, wobei erhitzte Frischluft die Warenbahn (1) und die Durchströmtrommel (5) durchströmt und die Abluft aus der Verfestigungsanlage abgezogen wird, **dadurch gekennzeichnet, dass** die Warenbahn (1) vor dem Ablösen von der Durchströmtrommel (5) mittels Kühlluft (9) gekühlt wird, wobei die Kühlluft (9) die Warenbahn (1) und die Durchströmtrommel (5) durchströmt, wobei die Kühlluft (9) durch ein Luftsystem von der Heiß- und Frischluft der Verfestigungsanlage getrennt wird.

10. Verfahren zum Verfestigen einer textilen Warenbahn nach Anspruch 9, **dadurch gekennzeichnet, dass** die Kühlluft durch das Luftsystem, das eine innerhalb der Durchströmtrommel (5) geschlossene Umlenkung bildet, wieder aus der Verfestigungsanlage abgeführt wird.

## Claims

1. A device for thermally entangling a web of textile material, wherein the web of textile material (1) is guided over a deflector drum (2) into an entangling installation, guided around a flow-through drum (5) and guided out again over a cooling drum (3), wherein heated fresh air flows through the web of material (1) and the flow-through drum (5) and the exhaust air is withdrawn from the entangling installation, **characterized in that** the cooling air (9) is directed onto the web of material (1) before the point of detachment of the web of material (1) from the flow-through drum (5), wherein the cooling air (9) is guided onto the web of material (1) by means of a duct (10) and/or a nozzle (12).

2. The device according to claim 1, **characterized in that** the cooling air (9) flows through the web of material (1) and through the flow-through drum (5).

3. The device according to claim 2, **characterized in that** the cooling air (9) is separated from the fresh and hot air within the flow-through drum (5) by means of an air system.

4. The device according to claim 3, **characterized in that** the air system is formed as a deflection, which is disposed within the flow-through drum (5) and is at least partially closed and by means of which the cooling air (9) is removed again from the entangling installation.

5. The device according to any of the aforementioned claims, **characterized in that** the air system comprises at least one duct (10a) or a screening plate (13).

6. The device according to claim 5, **characterized in that** the cooling air is removed from the entangling installation through a duct (10b), which is disposed in the area between the deflector drum (2) and the cooling drum (3).

7. The device according to claim 6, **characterized in that** the duct (10b) is disposed to be pivotable.

8. The device according to claim 5, **characterized in that** the screening plate (13) is formed as a concavely or convexly formed shell.

9. A method for entangling a web of textile material, wherein the web of textile material (1) is guided over a deflector drum (2) into an entangling installation, guided around a flow-through drum (5) and guided out again over a cooling drum (3), wherein heated fresh air flows through the web of material (1) and the flow-through drum (5) and the exhaust air is withdrawn from the entangling installation, **characterized in that** the web of material (1) is cooled by means of cooling air (9) prior to detaching from the flow-through drum (5), wherein the cooling air (9) flows through the web of material (1) and through the flow-through drum (5), wherein the cooling air (9) is separated from the hot air and the fresh air of the entangling installation by means of an air system.

10. The method for entangling a web of textile material according to claim 9, **characterized in that** the cooling air is removed again from the entangling installation through the air system, which forms a closed deflection within the flow-through drum (5).

## Revendications

1. Dispositif pour la consolidation thermique d'une nappe de tissu textile, dans lequel la nappe de tissu textile (1) est guidée sur un tambour déflecteur (2) vers une installation de consolidation, et guidée atour d'un tambour de passage d'air (5) et fait sortir en passant par un tambour de refroidissement (5), dans lequel de l'air frais chauffé passe à travers la nappe de tissu (1) et à travers le tambour de passage d'air (5) et l'air de sortie est soutiré de l'installation de consolidation, **caractérisé en ce que** l'air de refroidissement (9) est dirigé sur la nappe de tissu textile (1) avant le point de détachement de la nappe de tissu textile (1) du tambour de passage d'air (5), dans lequel l'air de refroidissement (9) est dirigé sur la nappe de tissu textile (1) par l'intermédiaire d'un canal (10) et/ou d'une buse (12).

2. Dispositif selon la revendication 1, **caractérisé en ce que** l'air de refroidissement (9) passe à travers la nappe de tissu (1) et le tambour de passage d'air (5).

3. Dispositif selon la revendication 2, **caractérisé en ce que** l'air de refroidissement (9) est séparé de l'air frais et de l'air chaud à l'intérieur du tambour de passage d'air (5) au moyen d'un système à air.

4. Dispositif selon la revendication 3, **caractérisé en ce que** le système à air est aménagé comme une déflection, qui est agencée à l'intérieur du tambour de passage d'air (5) et fermée au moins partiellement, et avec laquelle l'air de refroidissement (9) est évacué de l'installation de consolidation.

5. Dispositif selon l'une des revendications précédentes, **caractérisé en ce que** le système à air comporte au moins un canal (10a) ou une tôle de protection (13).

6. Dispositif selon la revendication 5, **caractérisé en ce que** l'air de refroidissement (9) est évacué de l'installation de consolidation à travers un canal (10b), lequel est agencé dans la région entre le tambour de déflection (2) et le tambour de refroidissement (3).

7. Dispositif selon la revendication 6, **caractérisé en ce que** le canal (10b) est agencé à être pivotable.

8. Dispositif selon la revendication 5, **caractérisé en ce que** la tôle de protection (13) est aménagée comme une coquille de forme concave ou convexe.

9. Méthode pour la consolidation d'une nappe de tissu textile, dans laquelle la nappe de tissu textile (1) est guidée sur un tambour déflecteur (2) vers une installation de consolidation, et guidée atour d'un tambour de passage d'air (5) et fait sortir en passant par un tambour de refroidissement (3), dans laquelle de l'air frais chauffé passe à travers la nappe de tissu textile (1) et à travers le tambour de passage d'air (5) et l'air de sortie est soutiré de l'installation de consolidation, **caractérisée en ce que**, avant de se détacher du tambour de passage d'air (5), la nappe de tissu (1) est refroidi au moyen d'air de refroidissement (9), dans laquelle l'air de refroidissement (9) passe à travers la nappe de tissu (1) et le tambour de passage d'air (5), dans laquelle l'air de refroidissement (9) est séparé de l'air chaud et de l'air frais de l'installation de consolidation par un système à air.

10. Méthode pour la consolidation d'une nappe de tissu textile selon la revendication 9, **caractérisée en ce que** l'air de refroidissement est évacué de l'installation de consolidation par le système à air, lequel forme une déflection fermée à l'intérieur du tambour de passage d'air (5).
